(19) **Europäisches Patentamt**

**European Patent Office**

**Office européen des brevets**

(11) **EP 0 978 933 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(51) Int Cl.:
***H02M 3/156*** *(2006.01)*

(21) Anmeldenummer: **99115506.0**

(22) Anmeldetag: **05.08.1999**

(54) **Gleichspannungswandler**

DC-DC converter

Convertisseur courant continu - courant continu

(84) Benannte Vertragsstaaten:
**AT BE CH CY DE DK ES FI FR GB GR IE IT LI LU MC NL PT SE**

(30) Priorität: **06.08.1998 DE 19835667**

(43) Veröffentlichungstag der Anmeldung:
**09.02.2000 Patentblatt 2000/06**

(73) Patentinhaber: **STMicroelectronics GmbH**
**85630 Grasbrunn (DE)**

(72) Erfinder:
• **Richter, Peter**
**82538 Geretsried (DE)**
• **Teissier, Maxime**
**US-Cambridge**
**MA 02141 (US)**

(74) Vertreter: **Hirsch, Peter**
**Klunker Schmitt-Nilson Hirsch**
**Winzererstrasse 106**
**80797 München (DE)**

(56) Entgegenhaltungen:
**EP-A- 0 680 135      DD-A- 132 614**
**DE-A- 19 517 355      US-A- 4 030 024**

**Beschreibung**

Die Erfindung betrifft einen Gleichspannungswandler zur Gleichspannungsherabwandlung, der zwei Eingangsanschlüsse zum Anschließen an eine Eingangsgleichspannungsquelle hohen Spannungswertes und zwei Ausgangsanschlüsse zum Abnehmen einer geregelten niedrigen Ausgangsgleichspannung aufweist.

Ein derartiger Gleichspannungswandler kommt beispielsweise in einem Netzgerät zum Einsatz, das eine Gleichrichterbrückenschaltung aufweist, deren einer Brückenzweig mit einer Wechselspannung, beispielsweise einer Netzwechselspannung, beaufschlagt wird und an dessen anderen Brückenzweig ein die gleichgerichtete Gleichspannung mehr oder weniger glättender Zwischenkreiskondensator angeschlossen ist. Die Ladegleichspannung dieses Zwischenkreiskondensators dient in diesem Fall als Eingangsgleichspannung für den Gleichspannungswandler.

Es gibt Gleichspannungswandler mit Potentialtrennung zwischen Eingangsgleichspannung und Ausgangsgleichspannung, und es gibt Gleichspannungswandler ohne eine solche Potentialtrennung. Ein Beispiel eines bekannten Spannungswandlers, bei dem eine solche Potentialtrennung mit Hilfe eines Transformators bewirkt wird, ist in Fig. 10 auf Seite 10/17 der Datenspezifikation VIPer 100/SP-VIPer 100/A/ASP der SGS-THOMSON MICROELECTRONICS von 1997 gezeigt. Der Transformator dieses bekannten Gleichspannungswandlers weist zwei Primärwicklungen auf. Eine davon ist mit einem elektronischen Schalter in Form eines MOS-Transistors verbunden, mit welchem die über einem Zwischenkreiskondensator anstehende Eingangsgleichspannung zerhackt wird, um sie in eine andere Spannung transformierbar zu machen. Der MOS-Transistor ist Teil einer monolithisch integrierten Schaltung, genannt VIPer, die eine Pulsbreitenmodulationsschaltung einschließlich Regelkreis und Oszillator enthält, mittels welcher die Ein- und Ausschaltzeiten des MOS-Transistors gesteuert werden. Die integrierte Schaltung VIPer wird aus einer zweiten Primärwicklung des Transformators gespeist und führt eine Pulsbreitenmodulation der den MOS-Transistor schaltenden Impulse in Abhängigkeit von der Ladespannung eines über die zweite Primärwicklung aufgeladenen Kondensators durch, indem dessen Ladespannung mit einer Referenzspannung verglichen wird. Eine ausführlichere Darstellung der in Fig. 10 der genannten Druckschrift nur sehr schematisch vorgestellten integrierten Schaltung VIPer findet sich in dem Blockdiagramm auf Seite 1/17 dieser Druckschrift

Ein derartiger Transformator mit zwei Primärwicklungen ist teuer und aufwendig. Für Anwendungen, bei denen eine Potentialtrennung zwischen der Eingangsgleichspannung und der Ausgangsgleichspannung nicht erforderlich ist, sind Gleichspannungswandler bekannt geworden, die ohne Transformator arbeiten. Ein bekannter Gleichspannungswandler dieser Art weist eine Reihenschaltung aus einem Widerstand, einem ersten Kondensator und einer Zenerdiode auf, die zwischen die beiden Eingangsanschlüsse des Gleichspannungswandlers geschaltet sind. Parallel zur Zenerdiode ist eine Reihenschaltung aus einer Diode und einem zweiten Kondensator geschaltet. Die Ladespannung des zweiten Kondensators dient als Ausgangsgleichspannung. Dabei werden die beiden Kondensatoren über den Widerstand und die Diode aufgeladen, bis die Ladespannung des zweiten Kondensators die Zenerdurchbruchspannung der Zenerdiode erreicht hat. Die Ausgangsgleichspannung hängt somit von der Zenerspannung der Zenerdiode ab. Bei dieser Lösung wird die Leistung, die nicht von der ausgangsseitigen Last abgenommen wird, in der Zenerdiode als Verlustleistung verbraucht. Auch bei kleiner Leistungsabnahme am Verbraucher entsteht somit immer eine Verlustleistung in Höhe der Nominalleistung. Insgesamt ist aber die Verlustleistung geringer als bei Vorwiderstandsnetzteilen. Der erste Kondensator muß jedoch relativ groß sein, was hohe Kosten für einen derartigen Gleichspannungswandler bedeutet.

Ein anderer bekannter Gleichspannungswandler ohne galvanische Trennung besitzt eine zwischen die beiden Eingangsanschlüsse geschaltete Reihenschaltung aus einer Diode, einem Widerstand und einer Zenerdiode, wobei der Zenerdiode ein Kondensator parallelgeschaltet ist, von dem die Ausgangsgleichspannung abnehmbar ist. Nachteil dieses Gleichspannungswandlers ist dessen hohe Verlustleistung.

Die beiden genannten bekannten Gleichspannungswandler ohne galvanische Trennung sind außerdem nur für Ausgangsleistungen im Bereich bis etwa 3 - 4 W geeignet.

Ein weiterer bekannter Gleichspannungswandler ohne Potentialtrennung besitzt im einen Längszweig zwischen Eingangsanschlüssen und Ausgangsanschlüssen eine Reihenschaltung aus einem MOS-Schalttransistor und einer Drossel. Zwischen die Ausgangsanschlüsse ist gegebenenfalls ein Spannungsteiler geschaltet, dessen Teilspannung als Steuergröße auf eine Pulsbreitenmodulationsschaltung gegeben wird, die dem MOS-Schalttransistor pulsbreitenmodulierte Schaltimpulse liefert.

Diese bekannte Gleichspannungswandlerschaltung ist heute für monolithisch integrierte Gesamtschaltungen auf Eingangsgleichspannungen von etwa 50 V begrenzt.

In DD 132 614 A ist eine Schaltungsanordnung eines Gleichspannungsreglers beschrieben, die einen durch pulslängenmodulierte Signale angesteuerten Regeltransistor aufweist. Zur Glättung der geschalteten Spannung sind dem Regeltransistor ein LC-Tiefpass und eine Freilaufdiode zum Abbau der gespeicherten Energie in der Speicherdrossel nachgeschaltet. Die Speicherdrossel weist eine Anzapfung auf, an die die Freilaufdiode angeschlossen wird, deren andere Elektrode mit dem Gegenpotenzial verbunden ist.

Die Erfindung macht einen Gleichspannungswandler ohne galvanische Trennung zwischen Eingangsspannungsseite und Ausgangsspannungsseite verfügbar, der sich für hohe Eingangsgleichspannungen eignet, verlustleistungsarm ist und sich mit vergleichsweise niedrigen Kosten herstellen läßt. Dies wird erreicht mit einem erfindungsgemäßen Gleichspannungswandler, wie er im Anspruch 1 angegeben ist und gemäß den weiteren Ansprüchen ausgebildet sein kann.

Ein erfindungsgemäßer Gleichspannungswandler zur Gleichspannungsherabwandlung umfaßt zwei Eingangsanschlüsse zum Anschließen an eine Eingangsgleichspannungsquelle hohen Spannungswertes, zwei Ausgangsanschlüsse zum Abnehmen einer geregelten niedrigen Ausgangsgleichspannung, eine einen Mittenabgriff aufweisende Spule, die einen Endes über eine elektronische Schaltereinrichtung mit einem ersten der Eingangsanschlüsse und über einen ersten Kondensator mit dem zweiten Eingangsanschluß verbunden ist, wobei die Ladespannung des ersten Kondensators die Ausgangsgleichspannung bildet. Außerdem ist ein zweiter Kondensator vorgesehen, der einen Endes mit einem zwischen Schaltereinrichtung und Spule befmdlichen Schaltungsknoten und anderen Endes über eine erste Diode mit dem Mittenabgriff verbunden ist. Desweiteren ist eine Steuereinrichtung vorhanden, mittels welcher die Ladespannung des zweiten Kondensators mit einer Referenzspannung vergleichbar und die Schaltereinrichtung mit einer von dem Vergleichsergebnis abhängend pulsbreitenmodulierten Schaltimpulsfolge leitend und nicht-leitend schaltbar ist. Außerdem ist eine zweite Diode vorgesehen, die zwischen den Mittenabgriff und den zweiten Eingangsanschluß geschaltet ist. Dabei sind die beiden Dioden derart gepolt, daß sie bezüglich des bei nicht-leitend geschalteter Schaltereinrichtung am Mittenabgriff auftretenden Potentials zum zweiten Kondensator hin bzw. vom zweiten Eingangsanschluß weg leitend sind.

Vorteil dieses erfindungsgemäßen Gleichspannungswandler ist, daß er mit einer kostengünstigen Spule, vorzugsweise in Form eines preiswerten Spartransformators, auskommt. Für das Schalten der Spule kann die bereits genannte bekannte integrierte Schaltung VIPer eingesetzt werden, die sowohl die elektronische Schaltereinrichtung in Form eines hochspannungsfesten MOS-Transistors als auch die dessen Schalten steuernde Steuereinrichtung enthält. Damit ergibt sich insgesamt ein recht preiswerter Gleichspannungswandler.

Der erfmdungsgemäße Gleichspannungswandler kann Teil eines Netzgerätes sein, dessen Eingangsgleichspannungsquelle durch einen Zwischenkreiskondensator einer Gleichrichterschaltung gebildet ist.

Die Erfindung sowie weitere Aufgabenaspekte und Vorteile der Erfindung werden nun anhand einer beispielsweisen Ausführungsform erläutert, die in den beiliegenden Zeichnungen dargestellt ist. Darin zeigen:

Fig. 1    ein Blockschaltbild einer Ausführungsform eines Netzgerätes mit einem erfindungsgemäßen Gleichspannungswandler; und

Fig. 2    Einzelheiten der in Fig. 1 gezeigten integrierten Schaltung, wobei die integrierte Schaltung nur teilweise dargestellt ist.

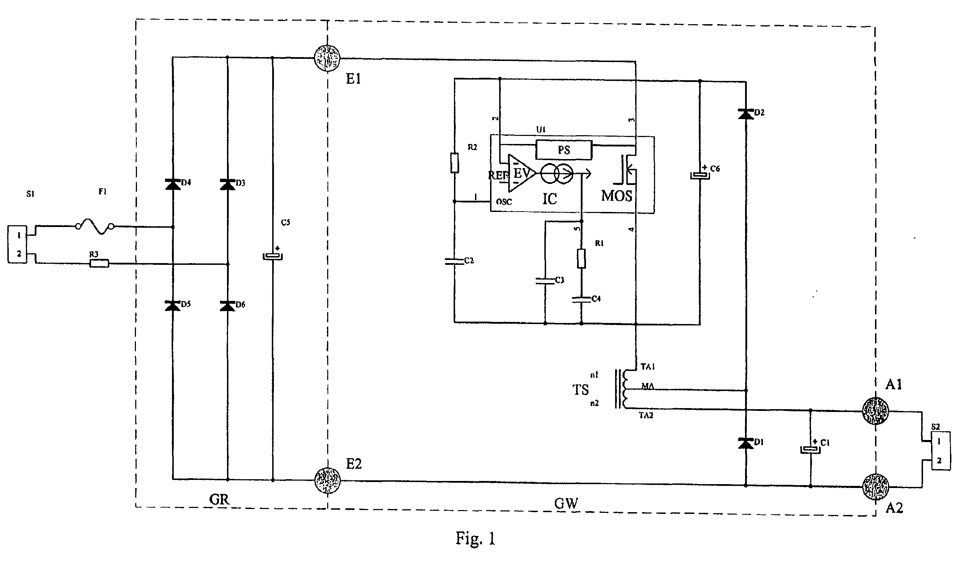

Fig. 1 zeigt ein elektrisches Schaltbild einer Schaltungsanordnung, die eine gestrichelt eingerahmte Gleichrichterschaltung GR und einen ebenfalls gestrichelt eingerahmten Gleichspannungswandler GW umfaßt. In bekannter Weise weist die Gleichrichterschaltung eine Vollwellen-Gleichrichterbrücke mit vier Gleichrichterdioden D3 - D6 auf. Eingangsseitig ist die Gleichrichterbrücke über eine Sicherung F1 und einen Widerstand R3 mit zwei Kontakten eines Steckverbinders S1 verbunden, mit dem die Gleichrichterschaltung GR an eine (nicht dargestellte) Wechselspannungsquelle anschließbar ist, beispielsweise eine Netzsteckdose. An die Ausgangsseite der Gleichrichterbrücke ist ein Zwischenkreiskondensator C5 angeschlossen, in dem die gleichgerichtete Spannung mehr oder weniger geglättet wird. Wahlweise kann auch nur eine Diode zur Erzeugung der Gleichspannung eingesetzt werden. Der Zwischenkreiskondensator C5 ist an Eingangsanschlüsse E1 und E2 des Gleichspannungswandlers GW angeschlossen. Über diese Einganganschlüsse E1 und E2 wird dem Gleichspannungswandler GW die Ladespannung des Zwischenkreiskondensators C5 als Eingangsgleichspannung zugeführt.

Der Gleichspannungswandler GW weist außerdem zwei Ausgangsanschlüsse A1 und A2 auf, an welche ein zweiter Steckverbinder S2 angeschlossen ist, mit dem an den Gleichspannungswandler GW eine Last anschließbar ist.

Der Gleichspannungswandler GW weist eine Drossel in Form eines Spartransformators TS auf. Dieser besitzt einen in Fig. 1 oberen Transformatoranschluß TA1, einen in Fig. 1 unteren Transformatoranschluß TA2 und einen Mittenabgriff MA. TA1 ist über einen Schalttransistor MOS mit dem Eingangsanschluß E1 verbunden. TA2 ist mit dem Ausgangsanschluß A1 direkt und mit dem Ausgangsanschluß A2 über einen Ausgangskondensator C1 verbunden. Die Ladespannung über C1 bildet die Ausgangsgleichspannungdes Gleichspannungswandlers GW.

Der Schalttransistor MOS ist Teil einer integrierten Schaltung IC, die bei einer besonders bevorzugten Ausführungsform des erfindungsgemäßen Gleichspannungswandlers durch die bereits erwähnte bekannte integrierte Schaltung VIPer gebildet ist. Die integrierte Schaltung IC besitzt fünf Außenanschlüsse 1-5, über welche sie mit externen Schaltungsteilen verbunden ist. Anschluß 3 ist mit dem Eingangsanschluß E1 verbunden und Anschluß 4 ist mit dem Anschluß TA1 des Spartransformators TS verbunden. Zwischen Anschluß 2 und dem Anschluß TA1 des Spartransformators TS befindet sich ein Kondensator C6. Eine Diode D1 befindet sich zwischen dem Mittenabgriff MA und dem Ausgangsanschluß A2, während sich eine Diode D2 zwischen dem Mittenabgriff und dem Anschluß 2 befindet, wobei die Dioden D1 und D2 in der in Fig. 1 dargestellten Weise gepolt sind. D.h., D1 weist mit ihrer Kathode und D2 weist mit ihrer Anode zum Mittenabgriff MA.

Die integrierte Schaltung IC weist neben dem Schaltertransistor MOS eine Steuereinrichtung auf, mittels welcher das Ein- und Ausschalten des Transistors MOS gesteuert wird. Die Steuerrichtung umfaßt einen Fehlerverstärker EV, dessen invertierender Eingang funktional mit Anschluß 2 von IC und dessen nichtinvertierender Eingang mit einer Referenzspannungsquelle REF verbunden sind. Bei dem dargestellten Beispiel hat die Referenzspannung einen Wert von 13 V.

Der Anschluß 1 von IC ist mit einem RC-Oszillator mit einem Widerstand R2 und einem Kondensator C2 verbunden. Mittels dieses Oszillators wird ein Taktsignal erzeugt, das zum abwechselnden Leitendschalten und Nicht-Leitendschalten des Schalttransistors MOS verwendet wird. Die auf einen Steueranschluß von MOS gegebene Schaltimpulsfolge ist pulsbreitenmoduliert. Als pulsbreitenmodulierendes Signal dient das vom Fehlerverstärker EV abgegebene Fehlersignal, das ein Maß für die Abweichung der am Anschluß zwei anliegenden Ladespannung des Kondensators C6 vom Spannungswert der Referenzspannungsquelle REF darstellt.

Anschluß 5 der integrierten Schaltung IC ist mit Schaltungskomponenten in Form eines Widerstandes R1 und zweier Kondensatoren C3 und C4 verbunden, die der Einstellung des Verhaltens des Fehlerverstärkers EV dienen. Dabei sind R1 und C4 in Reihe zueinander geschaltet, während C3 dieser Reihenschaltung parallel geschaltet ist. Die von den Anschlüssen 1 und 5 abliegenden Seiten der Kondensatoren C2 bzw. C3 und C4 sind mit dem Anschluß TA1 verbunden.

Die integrierte Schaltung IC besitzt außerdem eine eigene Spannungsversorgungsquelle PS, die sich zwischen den Anschlüssen 2 und 3 von IC befindet.

Hinsichtlich der Einzelheiten der integrierten Schaltung IC, die aus der Darstellung in der Figur nicht hervorgehen, wird auf das Blockdiagramm auf Seite 1/17 der eingangs erwähnten Datenspezifikation der integrierten Schaltung VIPer verwiesen.

Die in der Figur dargestellte Schaltungsanordnung arbeitet wie folgt:

In bekannter und daher nicht erläuterungsbedürftiger Weise wird aus der über den Steckverbinder S1 zugeführten Wechselspannung mittels der Gleichrichterschaltung GR über dem Zwischenkreiskondensator C5 eine Eingangsgleichspannung erzeugt, deren Wert von der Wechselspannung abhängt. Bei dieser handelt es sich beispielsweise um eine Netzwechselspannung mit 220 V und 50 Hz. Während der Phasen, in welchen der Schalttransistor MOS leitend geschaltet ist, fließt durch diesen Schalttransistor MOS und den Spartransistor TS ein Ladestrom auf den Ausgangskondensator C1. Die als Spartransformator TS wirkende Drossel wirkt dabei als Stromsenke, die zu den Zeitpunkten des Leitendschaltens des Schalttransistors MOS mit induktiver Energie aufgeladen wird, die sie zu den Zeitpunkten des Abschaltens als Stromquelle wieder abgibt. Diese gespeicherte Energie wird auf die beiden Kondensatoren C1 und C6 verteilt.

Bei leitend geschaltetem Schalttransistor MOS liegt der Anschluß TA1 des Spartransformators TS auf der durch die Ladespannung des Zwischenkreiskondensators C5 gebildeten hohen Eingangsgleichspannung. TA2 ist fest mit der einen Seite von C1 verbunden. Wird der Schalttransistor MOS wieder nichtleitend geschaltet, wird das Potential des Anschlusses MA des Spartransformators wegen der Stromquellencharakteristik von TS soweit unter das Spannungspotential von TA2 sinken, bis ein Strom über D1 und MA aus TA2 fließen kann. Der Mittenabgriff MA liegt daher über die als Freilaufdiode wirkende Diode D1 an der die Anschlüsse E2 und A2 verbindenden Masseleitung. MA liegt somit auf einem Potential, das nur um die Durchlaßspannung von D1 tiefer liegt als das Massepotential. Gleiches Prinzip gilt für den Anschluß TA1 Das Potential von TA1 sinkt soweit unter das Potential von MA, daß ein Strom über die Diode D2 und C2 und die zu C2 parallel geschalteten Komponenten fließen kann. Als Folge davon ist das Potential von MA positiver als das am Anschluß TA1 anliegende Potential, so daß die Diode D2 ebenfalls leitet. Deswegen wird der Kondensator C6 aufgeladen bzw. nachgeladen. Über die Drossel bzw. den Spartransformator TS wird daher der Ausgangskondensator C1 sowohl während der Phasen des leitend geschalteten Schalttransistors MOS als auch während der Freilaufphase von TS nachgeladen. Der Kondensator C6 wird während der Phasen des nichtleitend geschalteten Schalttransistors MOS aufgeladen bzw. nachgeladen.

Das Verhältnis, mit welchem die beiden Kondensatoren C1 und C6 aufgeladen werden, hängt von dem Wicklungsverhältnis der beiden Wicklungsteile n1 und n2 zwischen TA1 und MA bzw. zwischen MA und TA2 des Spartransformators TS ab. Das heißt, die Spannungen, auf welche die beiden Kondensatoren C1 und C6 aufgeladen werden, hängen von der Lage des Mittenabgriffs MA entlang der Drosselwicklung ab.

Wenn die an den Steckverbinder S2 angeschlossene Last Strom vom Ausgangskondensator C1 abzieht, wird die in TS gespeicherte Energie so zwischen C1 und C6 aufgeteilt, daß weiterhin ein Spannungsverhältnis von C1 zu C6 auftritt, das gleich dem Verhältnis von n1 zu n2 ist. Ein Absinken der durch die Ladespannung von C1 gebildeten Ausgangsgleichspannung führt zu einem entsprechenden Absinken der Ladespannung des Kondensators C6. Dies hat zur Folge, daß die dem Fehlerverstärker EV über den Anschluß 2 der integrierten Schaltung IC zugeführte Spannung relativ zur Referenzspannung der Referenzspannungsquelle REF abnimmt. Die daraus resultierende Änderung des Fehlersignals am Ausgang des Fehlerverstärkers EV führt zu einer Verbreiterung der pulsbreitenmodulierten Schaltimpulse für den Schalttransistor MOS und damit zu einer Zunahme der in die Drossel bzw. den Spartransformator TS gepumpten induktiven Energie. Dies führt wiederum zu einer stärkeren Aufladung des Ausgangskondensators C1 und zu einer entsprechenden Zunahme der Ladespannung des Kondensators C6 und zu einer Abnahme des Fehlersignals am Ausgang des Fehlerverstärkers EV, mit der Folge einer Verringerung der jeweiligen Einschaltzeit des Schalttransistors MOS. Auf diese Weise wird somit die an den Ausgangsanschlüssen A1 und A2 anstehende Ausgangsgleichspannung auf einen Spannungswert geregelt, der von dem Spannungswert der Referenzspannungsquelle REF und der Lage des Mittenabgriffs des Spartransformators TS abhängt.

Der Schalttransistor MOS ist vorzugsweise als Hochspannungs-Leistungs-MOS-Transistor ausgelegt, um höhere Eingangsgleichspannungen zu verkraften als die bisher bei monolithischen Schaltreglern üblichen 50 V. Eine Gleichrichterschaltung der in der Figur dargestellten Art kann beispielsweise für Eingangsgleichspannungen im Bereich von 300 V verwendet werden.

Bei einem Spannungswert der Referenzspannungsquelle REF von beispielsweise 13 V erhält man über dem Ausgangskondensator C1 folgende Ausgangsgleichspannung:

$$Vout = 13 \text{ V } (n2/n1).$$

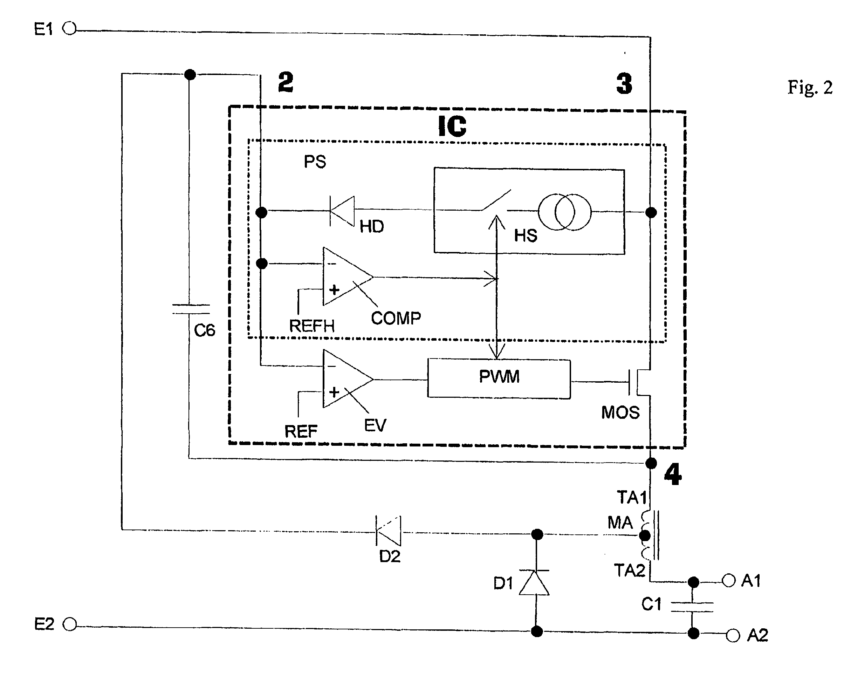

Die integrierte Schaltung IC braucht, um arbeiten zu können, eine bestimmte Mindestspannung am Anschluß 2. Zum Zeitpunkt des Einschaltens des GR und GW umfassenden Netzgerätes sind die beiden Kondensatoren C1 und C6 entladen, steht somit am Anschluß 2 von IC keine Spannung zur Verfügung, die als Betriebsspannung von IC verwendet werden könnte. Der Schalttransistor MOS kann daher nicht leitend geschaltet werden und somit kann kein Strom durch den Spartransformator TS fließen, der eine Voraussetzung für die Aufladung von C1 und C6 ist. Daher enthält die Spannungsversorgungsquelle PS der integrierten Schaltung IC, wie in Fig. 2 dargestellt ist, eine schaltbare Hochlaufstromquelle HS, die solange eingeschaltet ist, wie die am Anschluß 2 von IC anliegende Ladespannung des Kondensators C6 eine vorbestimmte Hochlaufspannungsschwelle nicht erreicht hat. Diese wird durch einen Komparator COMP definiert, der die Ladespannung von C6 mit einer Hochlaufreferenzspannung REFH vergleicht. Solange diese noch nicht erreicht ist, ist die schaltbare Hochlaufstromquelle HS eingeschaltet und führt über eine Hochlaufdiode HD aus der Eingangsgleichspannungsquelle entnommenen Hochlaufladestrom auf den Kondensator C6. Sobald der durch REFH vorgegebene Hochlaufschwellenwert erreicht ist, wird die Hochlaufstromquelle HS abgeschaltet und erfolgt die Versorgung der integrierten Schaltung IC aus der dann ausreichenden Ladespannung des Kondensators C6. Die integrierte Schaltung IC weist somit eine Selbststartfunktion mit Softstart-Funktion auf.

Näheres ist der bereits erwähnten Datenspezifikation zur integrierten Schaltung VIPer zu entnehmen, insbesondere dem Blockschaltbild auf Seite 1/17 dieser Datenspezifikation.

Zum Zeitpunkt des Einschaltens des den Gleichrichter GR und den Gleichspannungswandler GW enthaltenden Netzgerätes kann der Ausgangskondensator C1 entladen und die Ausgangsgleichspannung Null sein. Zu diesem Zeitpunkt kann auch der Kondensator C6 entladen sein, so daß am Ausgang des Fehlerverstärkers EV ein sehr hoher Regelfehler mit entsprechendem Regelbedarf auftritt. Als Folge davon würde der Schalttransistor MOS mit maximalem Tastverhältnis angesteuert und es entstünde eine zu hohe Spannung am Mittenabgriff MA des Spartransformators TS. Um dies zu vermeiden, ist die integrierte Schaltung IC beim Einschalten des Netzgerätes zunächst gedrosselt, indem während einer Anlaufphase eine feste Pulsbreite der den Schalttransistor MOS schaltenden Schaltimpulsfolge, also ein festes Tastverhältnis, fest eingestellt wird. Dieses beträgt beispielsweise 10 %. Das Ende der Anlaufphase kann man entweder von dem Ablauf einer vorbestimmten Zeitdauer ab dem Einschalten des Netzgerätes oder von dem Erreichen eines vorbestimmten Spannungswertes der Ladespannung des Kondensators C6 abhängig machen. Beispielsweise kann man von dem festen Tastverhältnis in das vom Fehlersignal des Fehlerverstärkers EV abhängende Tastverhältnis übergehen, wenn die Ladespannung des Kondensators C6 den Hochlaufreferenzspannungswert REFH am Komparator COMP erreicht hat. In diesem Fall kann man mit dem Ausgangssignal des Komparators COMP gleichzeitig die Hochlaufstromquelle HS abschalten und die Pulsbreitenmodulationsschaltung vom festen Tastverhältnis der Anlaufphase auf das veränderliche Tastverhältnis der Regelphase umschalten.

Bei einer bevorzugten Ausführungsform ist die Versorgungsspannungsquelle PS der integrierten Schaltung IC als Spannungsregelungsschaltung ausgebildet, mittels welcher sich die integrierte Schaltung IC aus der Ladespannung des Kondensators C6 eine interne Versorgungsgleichspannung erzeugt.

**Patentansprüche**

1.  Gleichspannungswandler zur Gleichspannungsherabwandlung,

    a) mit zwei Eingangsanschlüssen (E1, E2) zum Anschließen an eine Eingangsgleichspannungsquelle hohen Spannungswertes;
    b) mit zwei Ausgangsanschlüssen (A1, A2) zum Abnehmen einer geregelten niedrigen Ausgangsgleichspannung;
    c) mit einer einen Mittenabgriff (MA) aufweisenden Spule (TS), die einen Endes (TA1) über eine elektronische Schaltereinrichtung (MOS) mit einem ersten (E1) der Eingangsanschlüsse und anderen Endes (TA2) über einen ersten Kondensator (C1) mit dem zweiten Eingangsanschluß (E2) verbunden ist;

d) wobei die Ladespannung des ersten Kondensators (C1) die Ausgangsgleichspannung bildet;

**gekennzeichnet durch**

e) einen zweiten Kondensator (C6), der einen Endes mit einem zwischen Schalteinrichtung (MOS) und Spule (TS) befindlichen Schaltungsknoten und anderen Endes über eine erste Diode (D2) mit dem Mittenabgriff (MA) verbunden ist;

f) eine Steuereinrichtung (EV, PWM) mittels welcher die Ladespannung des zweiten Kondensators (C6) mit einer Referenzspannung (REF) vergleichbar und die Schaltereinrichtung (MOS) mit einer von dem Vergleichsergebnis abhängenden pulsfrequenz- und/oder pulsbreitenmodulierten Schaltimpulsfolge leitend und nicht-leitend schaltbar ist;

g) und eine zweite Diode (D1), die zwischen den Mittenabgriff (MA) und den zweiten Eingangsanschluß (E2) geschaltet ist;

h) wobei die beiden Dioden (D1, D2) derart gepolt sind, daß sie bezüglich des bei nicht-leitend geschalteter Schaltereinrichtung (MOS) am Mittenabgriff (MA) auftretenden Potentials zum zweiten Kondensator (C6) hin bzw. vom zweiten Eingangsanschluß (E2) weg leitend sind.

2. Gleichspannungswandler nach Anspruch 1, bei welchem die Eingangsgleichspannungsquelle durch die Ladespannung eines Zwischenkreiskondensators (C5) einer Gleichrichterschaltung (GR) gebildet ist.

3. Gleichspannungswandler nach Anspruch 1 oder 2, bei welchem die Spule durch einen Spartransformator (TS) gebildet ist.

4. Gleichspannungswandler nach einem der Ansprüche 1 bis 3, bei welchem die Schaltereinrichtung (MOS) mit einem MOS-Transistor aufgebaut ist.

5. Gleichspannungswandler nach Anspruch 4, bei welchem der MOS-Transistor durch einen Hochspannungs-Ixistungs-MOS-Transistor gebildet ist.

6. Gleichspannungswandler nach einem der Ansprüche 1 bis 5, bei welchem die Steuereinrichtung dazu ausgebildet ist, während einer auf das Einschalten des Gleichspannungswandlers (Gw) folgenden Anlaufphase eine Schaltimpulsfolge mit vorbestimmter konstanter Pulsfrequenz und/oder Pulsbreite zu liefern.

7. Gleichspannungswandler nach Anspruch 6, bei welchem die Anlaufphase durch eine vorbestimmte Anlaufzeitdauer bestimmt ist.

8. Gleichspannungswandler nach Anspruch 6, bei welchem die Anlaufphase bis zu dem Zeitpunkt dauert, zu welchem die Ladespannung des zweiten Kondensators (C6) einen vorbestimmten Spannungswert (REFH) erreicht hat.

9. Gleichspannungswandler nach einem der Ansprüche 1 bis 8, bei welchem die Steuereinrichtung eine Regelschaltung (PS) aufweist, mittels welcher sich die Steuereinrichtung aus der Ladespannung des zweiten Kondensators (C6) eine geregelte Versorgungsgleichspannung erzeugt.

10. Gleichspannungswandler nach einem der Ansprüche 1 bis 9, bei welchem die Steuereinrichtung eine aus der Eingangsgleichspan nungsquelle speisbare, schaltbare Hochlaufstromquelle (HS) aufweist, mittels welcher der zweite Kondensator (C6) während einer auf das Einschalten des Gleichspannungswandlers (GW) folgenden Hochlaufphase des Gleichspannungswandlers (GW) auf eine vorläufige Ladespannung aufladbar ist, mit welcher das Schalten der Schaltereinrichtung (MOS) sicher steuerbar ist, und welche beim Erreichen der vorläufigen Ladespannung abschaltbar ist.

11. Gleichspannungwandler nach einem der Ansprüche 1 bis 10, bei welchem die Steuereinrichtung einen Oszillator (OSC) zur Erzeugung eines Taktsignals für die Schaltimpulsfolge aufweist.

**Claims**

1. A DC converter for stepping down DC voltage, comprising

   a) two input terminals (E1, E2) to be connected to an input DC voltage source with a high voltage level;
   b) two output terminals (A1, A2) for taking off a regulated low output DC voltage;
   c) a coil (TS) having a center tap (MA) and connected at one end (TA1) with a first one (E1) of the input terminals via an electronic switch device (MOS) and at the other end (TA2) with the second input terminal (E2) via a first capacitor (C1);
   d) the charging voltage of the first capacitor (C1) forming the output DC voltage;
   **characterized by**
   e) a second capacitor (C6) connected at one end with a node located between switching device (MOS) and coil (TS) and at the other end with the center tap (MA) via a first diode (D2);

f) a control device (EV, PWM) for comparing the charging voltage of the second capacitor (C6) with a reference voltage (REF) and rendering the switching device (MOS) conductive and nonconductive with a pulse-frequency modulated and/or pulse-width modulated switching pulse sequence that depends on the result of the comparison;

g) and a second diode (D1) connected between the center tap (MA) and the second input terminal (E2);

h) the two diodes (D1, D2) being poled to conduct currerit toward the second capacitor (C6) or away from the second input terminal (E2) with respect to the potential occurring on the center tap (MA) when the switching device (MOS) is nonconductive.

2. The DC converter of claim 1 wherein the input DC voltage source is formed by the charging voltage of an intermediate circuit capacitor (C5) of a rectifier circuit (GR).

3. The DC converter of claim 1 wherein the coil is formed by an autotransformer (TS).

4. The DC converter of any of claims 1 to 3 wherein the switching device (MOS) is constructed with a MOS transistor.

5. The DC converter of claim 4 wherein the MOS transistor is formed by a high voltage power MOS transistor.

6. The DC converter of any of claims 1 to 5 wherein the control device is configured to provide a switching pulse sequence with a predetermined constant pulse frequency and/or pulse width during a startup phase following the turn-on of the DC converter (GW).

7. The DC converter of claim 6 wherein the startup phase is determined by a predetermined startup time period.

8. The DC converter of claim 6 wherein the startup phase lasts until the time at which the charging voltage of the second capacitor (C6) has reached a predetermined voltage level (REFH).

9. The DC converter of any of claims 1 to 8 wherein the control device has a regulator circuit (PS) by which the control device generates a regulated DC supply voltage for itself from the charging voltage of the second capacitor (C6).

10. The DC converter of any of claims 1 to 9 wherein the control device has a switchable run-up current source (HS) to be fed from the input DC voltage source for charging the second capacitor (C6), during a run-up phase of the DC converter (GW) following the turn-on of the DC converter (GW), to a preliminary charging voltage for reliably controlling the switching of the switch device (MOS), and which can be turned off when the preliminary charging voltage is reached.

11. The DC converter of any of claims 1 to 10 wherein the control device has an oscillator (OSC) for generating a clock signal for the switching pulse sequence.

## Revendications

1. Convertisseur continu-continu pour abaisser une tension continue,

a) avec deux bornes d'entrée (E1, E2) pour la connexion à une source de tension d'entrée continue de valeur élevée;

b) avec deux bornes de sortie (A1, A2) pour prélever une tension continue basse régulée;

c) avec une bobine (TS) ayant un point milieu (MA) dont une extrémité (TA1) est reliée par l'intermédiaire d'un dispositif de commutation électronique (MOS) à une première (E1) des bornes d'entrée et l'autre extrémité (TA2) est reliée par l'intermédiaire d'un premier condensateur (C1) à la seconde borne d'entrée (E2);

d) la tension de charge du premier condensateur (C1) formant la tension continue de sortie;

**caractérisé par**

e) un deuxième condensateur (C6) dont une extrémité est reliée à un noeud du circuit situé entre le dispositif de commutation (MOS) et la bobine (TS) et l'autre extrémité est reliée par l'intermédiaire d'une première diode (D2) au point milieu (MA);

f) un dispositif de commande (EV, PWM) au moyen duquel la tension de charge du deuxième condensateur (C6) paut être comparée à une tension de référence (REF) et le dispositif de commutation (MOS) peut être commuté à l'état conducteur ou non conducteur avec une série d'impulsions de commutation modulée en fréquence d'impulsion et/ou modulée en largeur d'impulsion en fonction du résultat de la comparaison;

g) une deuxième diode (D1) montée entre le point milieu (MA) et la seconde borne d'entrée (E2);

h) les deux diodes (D1, D2) étant polarisées de telle sorte qu"elles soient conductrices vers le deuxième condensateur (C6) ou depuis la seconde borne d'entrée (E2) par rapport un potentiel apparaissant au point milieu (MA) lorsque le dispositif de commutation (MOS) est commuté en position non conducteur.

2. Convertisseur continu-continu selon la revendication 1, dans lequel la source de tension continue d'entrée est formée par la tension de charge d'un condensateur intermédiaire (C5) d'un circuit redresseur (GR).

3. Convertisseur continu-continu selon la revendication 1 ou 2, dans lequel la bobine est formée par un autotransformateur (TS).

4. Convertisseur continu-continu selon l'une des revendications 1 à 3, dans lequel le dispositif de commutation (MOS) est réalisé avec un transistor MOS.

5. Convertisseur continu-continu selon la revendication 4, dans lequel, le transistor MOS est formé par un transistor MOS de puissance à haute tension.

6. Convertisseur continu-continu selon l'une des revendications 1 à 5, dans lequel le dispositif de commande est conçu afin de délivrer une série d'impulsions de fréquence d'impulsions et/ou de largeur d'impulsion constante prédéterminée, pendant une phase de démarrage suivant la mise en service du convertisseur continu-continu (Gw).

7. Convertisseur continu-continu selon la revendication 6, dans lequel la phase de démarrage est déterminée par une durée de phase de démarrage prédéterminée.

8. Convertisseur continu-continu selon la revendication 6, dans lequel la phase de démarrage dure jusqu'au moment où la tension de charge du deuxième condensateur (C6) a atteint une valeur prédéterminée.

9. Convertisseur continu-continu selon l'une des revendications 1 à 8, dans lequel le dispositif de commande présente un circuit de régulation (PS) au moyen duquel le dispositif de commande se génère, à partir de la tension de charge du deuxième condensateur (C6), une tension continue d'alimentation régulée.

10. Convertisseur continu-continu selon l'une des revendications 1 à 9, dans lequel le dispositif de commande présente une source de courant de lancement (HS) pouvant être mise en service, alimentée à partir de la source de tension continue d'entrée, au moyen de laquelle, pendant une phase de lancement du convertisseur continu-continu (GW) faisant suite à la mise en service du convertisseur continu-continu (GW), le deuxième condensateur (C6) peut être chargé à une tension de charge provisoire avec laquelle la mise en service du dispositif de commutation (MOS) peut être commandée de façon sure et qui peut être déconnectée lorsque la tension de charge positive a été atteinte.

11. Convertisseur continu-continu selon l'une des revendications 1 à 9, dans lequel le dispositif de commande présente un oscillateur (OSC) pour générer un signal de rythme pour la série d'impulsions de commutation.

Fig. 1

EP 0 978 933 B1

Fig. 2

EP 0 978 933 B1